# EUROPEAN PATENT APPLICATION

(11) **EP 2 832 503 A1**
(43) Date of publication of application: **04.02.2015**
(21) Application number: 14179069.1
(22) Date of filing: 30.07.2014
(51) Int. Cl.: B25J 9/16

(54) **Robot system and product manufacturing method**

(30) Priority: 31.07.2013 JP 2013159229
(71) Applicant: Kabushiki Kaisha Yaskawa Denki, Kitakyushu-shi, Fukuoka 806-0004 (JP)
(72) Inventor: Yasuda, Yuya, Kitakyushu-shi, Fukuoka 806-0004 (JP); Irie, Toshimitsu, Kitakyushu-shi, Fukuoka 806-0004 (JP)
(74) Representative: Viering, Jentschura & Partner Patent- und Rechtsanwälte

(57) **Abstract**

A robot system includes a robot, a container, a determinator, a motion controller, a torque limitter, and a stirring operation controller. The robot includes a drive source for driving a joint part and an end effector. The determinator determines whether a workpiece capable of being held by the end effector exists among workpieces accommodated within the container. The motion controller controls a motion of the drive source. When the determinator determines that there is no workpiece capable of being held by the end effector, the torque limitter limits a motion torque of the drive source. The stirring operation controller allows the motion controller to perform a stirring operation, by which the workpieces accommodated within the container are stirred by the end effector, in a state where the motion torque is limited by the torque limitter.

## Description

### BACKGROUND OF THE INVENTION

### Field of the Invention

Embodiments disclosed herein relate to a robot system and a product manufacturing method.

### Description of the Related Art

Japanese Patent Application Publication No. 2011-115930 discloses a robot system provided with a robot having an end effector. The robot system is configured to hold, e.g., a workpiece, with the end effector and to perform a manufacturing work of a product by using the workpiece thus held.

In the above robot system, workpieces are accommodated within a container in bulk so as to overlap with one another, for example. For that reason, there may be an accommodation state in which the workpieces interfere with one another or with the container due to the postures and positions of the workpieces, which makes it impossible for the end effector to hold the workpieces.

In the case of this accommodation state, the aforementioned robot system allows the end effector to move in the container after the entry of the end effector into the container to stir the workpieces and change the postures of the workpieces so as to create another accommodation state in which the workpieces can be held by the end effector.

However, if the stirring operation is performed in such a state that the workpieces are crowded within the container, the end effector may be caught by the workpieces. In the robot system configured as above, the end effector is moved in the caught state. If the end effector is continuously moved in that state, there is a fear that an excessive load is applied from the workpieces to the end effector or a drive motor and further that the end effector gets damaged.

### SUMMARY OF THE INVENTION

In view of the above, the embodiments provide a robot system and a product manufacturing method which are capable of performing a workpiece stirring operation without applying an excessive load to an end effector or the like, and without causing damage to the end effector.

In accordance with an aspect of the embodiment, a robot system includes a robot, a container, a determinator, a motion controller, a torque limitter and a stirring operation controller. The robot includes at least one joint part, at least one drive source for driving the at least one joint part and an end effector for holding a workpiece. The workpieces are accommodated within the container. The determinator is configured to determine whether a workpiece capable of being held by the end effector exists among the workpieces accommodated within the container. The motion controller is configured to control a motion of each drive source of the robot. The torque limitter is configured to, when the determinator determines that there is no workpiece capable of being held by the end effector, limit a motion torque of at least one of the each drive source to be commanded from the motion controller to the each drive source. The stirring operation controller is configured to, when the determinator determines that there is no workpiece capable of being held by the end effector, allow the motion controller to perform a stirring operation, by which the workpieces accommodated within the container are stirred by the end effector, in a state where the motion torque is limited by the torque limitter.

In accordance with the aspect of the embodiment, it is possible to perform a workpiece stirring operation without applying an excessive load to an end effector or the like, and without causing damage to the end effector.

### BRIEF DESCRIPTION OF THE DRAWINGS

Fig. 1 is a schematic overall view showing a configuration example of a robot system in accordance with an embodiment.
Fig. 2 is a schematic plane view of a container shown in Fig. 1.
Fig. 3 is a block diagram of the robot system shown in Fig. 1.
Fig. 4A is an explanatory view illustrating a state in which a hand is positioned in a start position of a stirring operation.
Fig. 4B is an explanatory view illustrating a state in which the hand shown in Fig. 4A is moved for a predetermined distance from the start position.
Fig. 5 is a flowchart showing a processing procedure performed by the robot system in accordance with an embodiment.
Fig. 6 is a schematic side view showing a product.

### DESCRIPTION OF THE EMBODIMENTS

Hereinafter, embodiments of a robot system and a product manufacturing method will now be described in detail with reference to the accompanying drawings. The present disclosure is not limited to the embodiments to be described below.

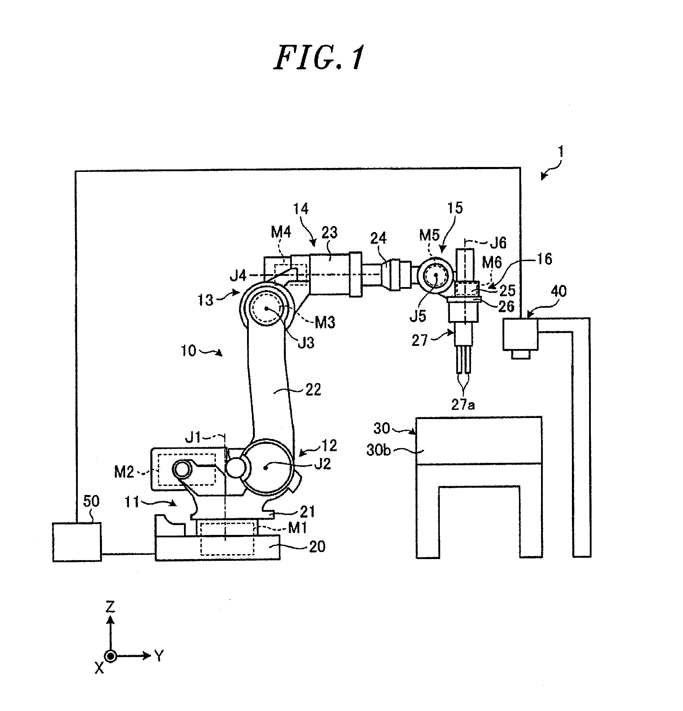

Fig. 1 is a schematic overall view showing a configuration example of a robot system in accordance with an embodiment. For the sake of easy understanding, Fig. 1 depicts a three-dimensional rectangular coordinate system including a Z-axis whose positive direction extends vertically upward and whose negative direction extends vertically downward, a Y-axis extending in a left-right direction on the drawing sheet surface of Fig. 1, and an X-axis extending from the rear side of the drawing sheet surface to the front side thereof. This rectangular coordinate system may be illustrated in other drawings which are used in the following description.

Hereinafter, description may be made using such expressions as "X-axis direction", "Y-axis direction" and "Z-axis direction", which merely denote respective directions with respect to the posture of the robot shown in Fig. 1, and the present disclosure is not limited to the expressed directions.

As shown in Fig. 1, a robot system 1 includes a robot 10, a container 30, a workpiece detecting sensor 40 and a processing system 50.

The robot 10 is an articulated robot having a plurality of links and a plurality of joint parts (first to sixth joint parts) 11 to 16. The joint parts interconnect the respective links. The links of the robot 10 include a base 20, a swivel part 21, a lower arm 22, an upper arm 23, a first wrist part 24, a second wrist part 25 and a wrist flange 26, all of which are rotatably connected to each other.

Specifically, the swivel part 21 is connected to the base 20 so as to rotate about a joint axis J1 of the first joint part 11. The lower arm 22 is connected to the swivel part 21 so as to rotate about a joint axis J2 of the second joint part 12 which is perpendicular to the joint axis J1. The upper arm 23 is connected to the lower arm 22 so as to rotate about a joint axis J3 of the third joint part 13 which is parallel to the joint axis J2. The first wrist part 24 is connected to the upper arm 23 so as to rotate about a joint axis J4 of the fourth joint part 14 which is perpendicular to the joint axis J3.

The second wrist part 25 is connected to the first wrist part 24 so as to rotate about a joint axis J5 of the fifth joint part 15 which is perpendicular to the joint axis J4. The wrist flange 26 is connected to the second wrist part 25 so as to rotate about a joint axis J6 of the sixth joint part 16 which is perpendicular to the joint axis J5.

The terms "perpendicular" and "parallel" do not necessarily require strict accuracy in terms of mathematics but permit a substantial tolerance or error. In the subject specification, the term "perpendicular" means a case where two straight lines (e.g., rotation axes) intersect each other at a right angle in skew position as well as in the same plane.

Among the first to sixth joint parts 11 to 16, the second, the third and the fifth joint part 12, 13 and 15 are joint parts that change the relative positions of the respective links by changing the angles between the respective links connected thereto. For example, the fifth joint part 15 changes the relative position of the first wrist part 24 and the second wrist part 25. The first, the fourth and the sixth joint part 11, 14 and 16 are joint parts that rotate the driven links about the respective rotation axes without changing the relative positions of the links connected thereto.

The robot 10 further includes drive sources M1 to M6 that drive the first to sixth joint parts 11 to 16. The drive sources M1 to M6 are, e.g., servo motors. While servo motors are taken as examples of the drive sources M1 to M6, the drive sources M1 to M6 are not limited thereto but may be other kinds of motors, e.g., hydraulic motors or the like. In the following description, the drive sources will be referred to as "motors".

Description will now be made on the respective motors M1 to M6. The motor M1 attached to the base 20 drives the first joint part 11 to rotate the swivel part 21. The motor M2 attached to the swivel part 21 drives the second joint part 12 to rotate the lower arm 22. The motor M3 attached to the lower arm 22 drives the third joint part 13 to rotate the upper arm 23.

The motor M4 attached to the upper arm 23 drives the fourth joint part 14 to rotate the first wrist part 24. The motor M5 attached to the first wrist part 24 drives the fifth joint part 15 to rotate the second wrist part 25. The motor M6 attached to the second wrist part 25 drives the sixth joint part 16 to rotate the wrist flange 26.

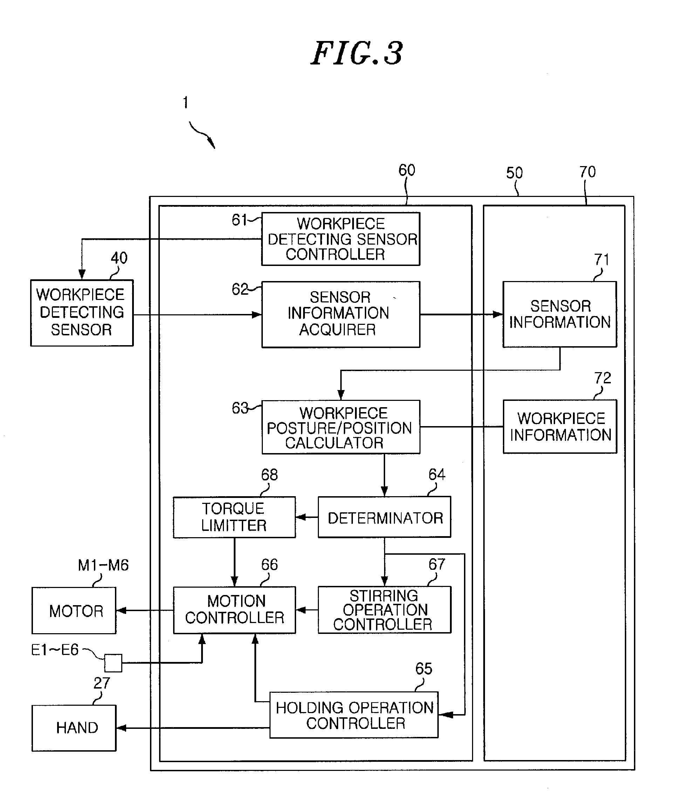

While not shown in Fig. 1, encoders E1 to E6 are respectively attached to the first to sixth motors M1 to M6 (see Fig. 3). Encoder values indicating the rotation amounts and rotation angles of the respective motors M1 to M6 are outputted from the encoders E1 to E6 to the processing system 50.

An end effector 27 is mounted to the leading end portion, more precisely the wrist flange 26, of the robot 10. The end effector 27 is, e.g., a hand that holds a workpiece W (not shown in Fig. 1) to be described later. The end effector 27 includes, e.g., a pair of gripping claws 27a and holds (grips) the workpiece W by using the gripping claws 27a. On this point, description will be made later.

In the following description, the end effector 27 will be referred to as "hand 27". However, the end effector 27 is not limited to the hand. It is only necessary that the end effector 27 is capable of holding the workpiece W. For example, the end effector 27 may be a suction part that sucks and holds the workpiece W.

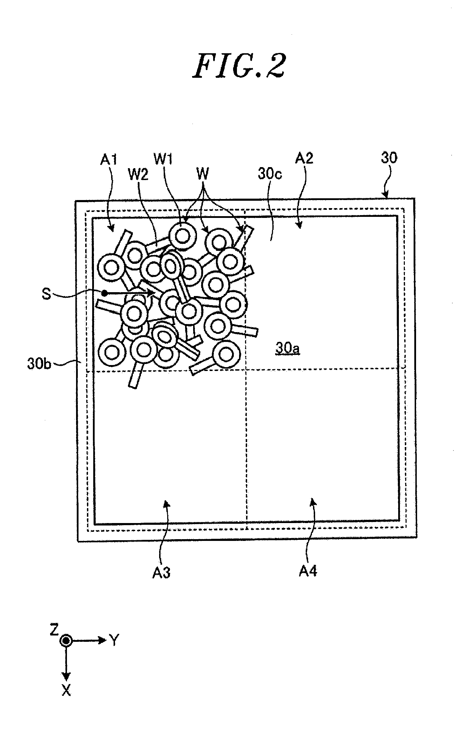

Fig. 2 is a schematic plane view of a container 30 shown in Fig. 1. The container 30 is a box formed into a substantially parallelepiped shape. The upper side of the container 30 in the Z-axis direction is opened and the workpieces W are accommodated within the container 30. In other words, the container 30 is configured to include a bottom surface 30a having a substantially rectangular shape when seen from the top and a wall portion 30b protruding from the outer edge portion of the bottom surface 30a in the Z-axis positive direction. The workpieces W are accommodated in an internal space 30c which is defined by the bottom surface 30a and the wall portion 30b.

The shape of the container 30 is not limited to the aforementioned shape but may be other shapes, e.g., a polygonal shape, a circular shape, an elliptical shape and the like when seen from the top. Moreover, the container 30 may not include the wall portion 30b.

As shown in Fig. 2, the workpieces W are accommodated within the container 30 in bulk. In Fig. 2, for the sake of simplicity in illustration, the workpieces W are provided only in the left upper section of the container 30 on the drawing sheet surface. However, the workpieces W are also accommodated in bulk in other sections, i.e., in the right upper section and the lower section of the container 30 on the drawing sheet surface.

Each of the workpieces W includes a ring-shaped portion W1 with a hole and a rod-shaped portion W2 extending radially outward from the outer circumference of the ring-shaped portion W1. The hand 27 holds a workpiece W by, e.g., a so-called inside gripping method in which the ring-shaped portion W1 is gripped by inserting the gripping claws 27a in a closed state into the hole of the ring-shaped portion W1 and opening the gripping claws 27a (i.e., moving away the gripping claws 27a from each other).

In the foregoing description, the operation of gripping the workpiece W by the hand 27 is performed by the inside gripping method. However, the present disclosure is not limited thereto. For example, the workpiece W may be held by a so-called outside gripping method in which the workpiece W is gripped by interposing the rod-shaped portion W2 between the gripping claws 27a. In addition, the workpiece W may be held by properly selecting one of the inside gripping method and the outside gripping method depending on the posture of the workpiece W or the like. Further, the portion of the workpiece W gripped by the hand 27 during the workpiece gripping operation is not limited to the aforementioned portions. Furthermore, the shape of the workpiece W is not limited to the aforementioned shape but may be other shapes, e.g., a rectangular parallelepiped shape, a spherical shape and the like.

The workpiece W held in the aforementioned manner is assembled with another kind of workpiece (to be described later) by the robot 10 or another robot (not shown) to thereby manufacture a product. In this regard, description will be made later.

Since the workpieces W are accommodated within the container 30 in bulk as described above, there may be an accommodation state in which no workpiece W can be taken and held by the hand 27 due to the postures and positions of the workpieces W. For example, if a workpiece W interferes with another workpiece W or with the wall portion 30b of the container 30, the workpiece W may not be taken by the hand 27.

In the case of this accommodation state, a conventional robot system makes the hand move within the container after the entry of the hand into the container to stir the workpieces and change the postures of the workpieces so as to create another accommodation state in which the workpiece can be held by the hand.

However, when the stirring operation is performed in such a state, e.g., that the workpieces are crowded within the container, the hand may be caught by the crowded workpieces. If the hand is kept moving in that state, there is a fear that an excessive load is applied from the workpieces to the hand or to the motors and that the hand gets damaged.

For that reason, the robot system 1 according to the present disclosure is configured such that a workpiece stirring operation can be performed without applying an excessive load to the hand 27 and the like and without causing damage to the hand 27. Detailed description will now be made on the configuration of the robot system 1 for performing such a workpiece stirring operation.

Referring back to Fig. 1, the workpiece detecting sensor 40 detects the posture and arrangement position of the workpieces W accommodated within the container 30. Specifically, the workpiece detecting sensor 40 is, e.g., a three-dimensional measuring device which is arranged above the container 30 in the Z-axis direction and which can measure the three-dimensional shape of the workpieces W. As the workpiece detecting sensor 40, it may be possible to use, e.g., a measuring unit that acquires a three-dimensional shape of an object by a scan operation using a laser slit beam.

The processing system 50 controls the operations of the respective motors M1 to M6 and the hand 27 of the robot 10 and the operation of the workpiece detecting sensor 40. Fig. 3 is a block diagram of the robot system 1.

As shown in Fig. 3, the processing system 50 includes a computer 60 and a memory 70. The computer 60 includes a workpiece detecting sensor controller 61, a sensor information acquirer 62, a workpiece posture/position calculator 63, a determinator 64, a holding operation controller 65, a motion controller 66, a stirring operation controller 67 and a torque limitter 68. The memory 70 stores sensor information 71 and workpiece information 72.

While one processing system 50 is shown in Fig. 3, it may be possible to provide a plurality of control devices 50 independently and make the control devices communicate to each other.

The computer 60 controls the overall operation of the processing system 50. The workpiece detecting sensor controller 61 outputs, to the workpiece detecting sensor 40, a detection start command, which instructs the workpiece detecting sensor 40 to start detection of the posture and position of the workpieces W, thereby operating the workpiece detecting sensor 40.

The sensor information acquirer 62 receives detection data from the workpiece detecting sensor 40 and stores the received detection data in the memory 70 as the sensor information 71. Here, the sensor information 71 indicates a three-dimensional shape of one or more workpieces W.

The workpiece posture/position calculator 63 calculates the postures and positions of the workpieces W based on the sensor information 71 and the workpiece information 72. Here, the workpiece information 72 defines the three-dimensional shape of the workpieces W or the gripped portion of the workpieces W. Specifically, for example, the ring-shaped portion W1 of the workpiece W is defined as the gripped portion in the case of the inside gripping method, and the rod-shaped portion W2 of the workpiece W is defined as the gripped portion in the case of the outside gripping method.

The workpiece posture/position calculator 63 calculates the postures and positions of the workpieces W within the container 30 based on the sensor information 71 by performing a matching process through the use of the workpiece information 72.

The determinator 64 receives the information indicative of the postures and positions of the workpieces W (hereinafter referred to as "workpiece posture information") from the workpiece posture/position calculator 63. Then, based on the received workpiece posture information, the determinator 64 determines whether a workpiece W that can be taken and held by the hand 27 exists among the workpieces W accommodated within the container 30.

Specifically, for example, if a workpiece W within the container 30 is in a state that can be taken and held by the hand 27, the determinator 64 determines that a holdable workpiece W exists. On the other hand, if no workpiece W within the container 30 is in a state that can be taken and held by the hand 27 due to, e.g., the mutual overlap of the workpieces W, the determinator 64 determines that there is no holdable workpiece W.

The determinator 64 transmits the determination result indicative of the presence and absence of the holdable workpiece W and the workpiece posture information to the holding operation controller 65 and the stirring operation controller 67. Furthermore, the determinator 64 transmits the determination result to the torque limitter 68.

Based on the determination result and the workpiece posture information transmitted from the determinator 64, the holding operation controller 65 controls the posture of the robot 10 and the operation of the hand 27 to perform a workpiece holding operation.

Specifically, in the case where the determinator 64 determines that there is a workpiece W capable of being taken and held by the hand 27, the holding operation controller 65 decides a holding posture of the robot 10 capable of performing the holding operation and a start timing at which the hand 27 starts the holding operation. Here, the holding posture of the robot 10 means a posture of the robot 10 in which the hand 27 comes closer to a workpiece W that is determined by the determinator 64 to be holdable.

The motion controller 66 controls the first to sixth motors M1 to M6 based on a signal inputted from the holding operation controller 65 or the like. Encoder values are inputted from the encoders E1 to E6 to the motion controller 66. In Fig. 3, for the sake of simplicity in illustration, the first to sixth motors M1 to M6 are illustrated in a single block. However, the motion controller 66 individually controls the first to sixth motors M1 to M6.

When a signal indicative of the holding posture of the robot 10 is inputted from the holding operation controller 65 to the motion controller 66, the motion controller 66 controls the positions of the first to sixth motors M1 to M6 based on the inputted signal and the encoder values, so that the robot 10 can take the holding position. Thus, the hand 27 is positioned near the workpiece W to be held.

Thereafter, the holding operation controller 65 drives the hand 27 at the aforementioned start timing to hold (grip) the workpiece W. In this way, the holding operation controller 65 allows the hand 27 to perform the workpiece holding operation, while controlling the posture of the robot 10 through the motion controller 66.

Based on the determination result and the workpiece posture information transmitted from the determinator 64, the stirring operation controller 67 controls the robot 10 to perform a stirring operation for the workpieces W.

Specifically, when the determinator 64 determines that there is no workpiece W capable of being held by the hand 27, the stirring operation controller 67 decides a start position of the stirring operation of the hand 27 within the container 30 based on the posture of the workpieces W of the container 30. Here, the start position of the stirring operation means, e.g., a location within the container 30 having a space into which the hand 27 can enter as indicated by a symbol S in Fig. 2, i.e., a position from which the stirring operation is started.

The stirring operation controller 67 generates a movement instruction to move the hand 27 for a predetermined distance from the start position S in a predetermined direction (e.g., toward the center of a region to be described later (in the example shown in Fig. 2, the Y-axis positive direction from the start position S)). A signal indicative of the start position S of the stirring operation and the movement instruction is inputted to the motion controller 66.

The motion controller 66 controls the motions of the first to sixth motors M1 to M6 such that the hand 27 is positioned in the start position S inputted from the stirring operation controller 67. Thus, the hand 27 is positioned in the start position S.

Description will now be made on the torque limitter 68. As mentioned above, the torque limitter 68 receives the determination result from the determinator 64. When the determinator 64 determines that there is no workpiece W capable of being held by the hand 27, the torque limitter 68 limits the motion torques of the first to sixth motors M1 to M6 to be commanded from the motion controller 66 to the first to sixth motors M1 to M6.

In this way, when the stirring operation is performed due to the absence of a holdable workpiece W, the motion torques of the first to sixth motors M1 to M6 are limited by the torque limitter 68. That is to say, the motion controller 66 controls the powers (torques) of the first to sixth motors M1 to M6.

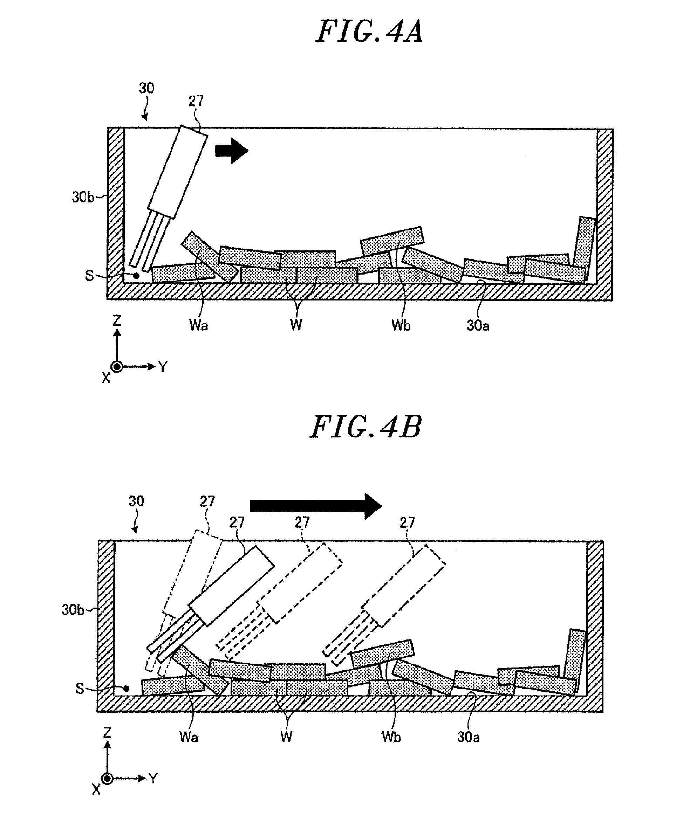

The stirring operation implemented by the motion controller 66 will now be described in detail with reference to Figs. 4A and 4B. Fig. 4A is an explanatory view illustrating a state in which the hand 27 is positioned in the start position S of the stirring operation. Fig. 4B is an explanatory view illustrating a state in which the hand 27 shown in Fig. 4A is moved for a predetermined distance from the start position S. In Figs. 4A and 4B, for the sake of simplicity in illustration, the hand 27, the workpieces W and the container 30 are schematically shown with the illustration of the wrist flange 26 omitted.

First, as shown in Fig. 4A, the motion controller 66 controls the motions of the first to sixth motors M1 to M6 such that the hand 27 is positioned in the start position S of the stirring operation. At this time, for example, the hand 27 is positioned in the start position S in such a state that the base end portion of the hand 27 is inclined toward the center of the container 30 with respect to the wall portion 30b. This makes it possible to prevent the hand 27 from interfering with the wall portion 30b of the container 30.

Next, based on the aforementioned movement instruction, the motion controller 66 controls the motions of the first to sixth motors M1 to M6 so that the hand 27 can move a predetermined distance from the start position S in a specified direction (the Y-axis positive direction in this example) within the container 30. At this time, the motion controller 66 controls the power of the first to sixth motors M1 to M6 in a state in which the motion torques of the first to sixth motors M1 to M6 are limited by the torque limitter 68, e.g., in a state in which the upper limit values of the motion torques are set by the torque limitter 68.

Accordingly, for example, if the workpieces W are crowded as shown in Fig. 4B, the hand 27 may be caught by the workpiece Wa during the movement of the hand 27 as indicated by a double-dot chain line. Since the powers of the first to sixth motors M1 to M6 are controlled in the aforementioned manner, the hand 27 is inclined due to the external force exerted by the workpiece Wa as indicated by a solid line. Even if the hand 27 is moved as indicated by a broken line, the hand 27 is moved to follow the outlines of the workpieces W.

Even if the hand 27 is caught by the workpiece Wa, the aforementioned configuration makes it possible to continue the stirring operation of the workpieces W without applying an excessive load from the workpiece Wa to the hand 27 and the respective motors M1 to M6 and without causing damage to the hand 27.

By continuing the stirring operation of the workpieces W, it is possible to increase the number of the workpieces W whose postures are changed by the stirring operation. Accordingly, there may be an instance where the hand 27 previously caught by the workpiece Wa collides with another workpiece Wb, as indicated by a single-dot chain line in Fig. 4B, and changes the posture of the workpiece Wb to a posture in which the workpiece Wb can be taken and held by the hand 27.

As described above, the hand 27 is positioned in the start position S and is then moved for a predetermined distance within the container 30 to perform the stirring operation. It is therefore possible to efficiently mix the workpieces W within the container 30.

In the foregoing description, the torque limitter 68 is configured to limit all the motion torques of the first to sixth motors M1 to M6. However, the present disclosure is not limited thereto. For example, the torque limitter 68 may be configured to limit at least the motion torque of the fifth motor M5 which is arranged in a position nearest to the hand 27 and which drives the fifth joint part 15 that changes the relative positions of the links connected thereto.

The reason for limiting the motion torque of the fifth motor M5 in the aforementioned manner is that, when the hand 27 is caught by the workpiece W during the stirring operation, the fifth joint part 15 is relatively easily affected by the external force originating from the workpiece W. By limiting at least the motion torque of the fifth motor M5 that drives the fifth joint part 15, it is possible to restrain an excessive load from being applied to the fifth motor M5 and the entirety of the robot 10.

The torque limitter 68 may be configured to limit the motion torques of at least two motors among the first to sixth motors M1 to M6. In the case of limiting the motion torques of two motors, if the hand 27 is caught by the workpiece W as mentioned above, it is preferable to limit the motion torques of, e.g., the fourth and the fifth motor M4 and M5 that drive the fourth and the fifth joint part 14 and 15, respectively, which are relatively easily affected by the external force from the workpiece W,. This makes it possible to prevent an excessive load from being applied to the fourth and the fifth motor M4 and M5.

The upper limit values of the motion torques of the first to sixth motors M1 to M6, which are limited by the torque limitter 68, may be set different from one another in the first to sixth motors M1 to M6. For example, the upper limit value of the motion torque of the fifth motor M5 that drives the joint part relatively easily affected by the external force when the hand 27 is caught by the workpiece W may be set to be the lowest, and the upper limit value of the motion torque of the fourth motor M4 may be set to be the second lowest (i.e., the upper limit value of the motion torque of the fifth motor M5 is set smaller than that of the fourth motor M4). This makes it possible to effectively prevent an excessive load from being applied to the fourth and the fifth motor M4 and M5.

Next, description will be made on a location within the container 30 where the holding operation and the stirring operation are performed. Specifically, the container 30 is divided into a plurality of regions and the holding operation and the stirring operation are performed in each of the regions of the container 30. In more detail, as indicated by the broken line in Fig. 2, the bottom surface 30a of the container 30 is divided into a plurality of (e.g., four) regions A1 to A4 so that the holding operation controller 65 can identify the regions A1 to A4.

The holding operation controller 65 allows the motion controller 66 to perform the holding operation for the workpiece W within one specified region (e.g., the region A1) among the regions A1 to A4. When it is determined that there is no workpiece W capable of being held by the hand 27 in the specified region (the region A1 in this example), the stirring operation controller 67 allows the motion controller 66 to perform the stirring operation.

When the number of the stirring operation performed by the stirring operation controller 67 reaches a predetermined number, the holding operation controller 65 allows the hand 27 to move to another region (e.g., the region A2) different from the specified region (the region A1 in this example) and allows the motion controller 66 to perform the holding operation.

That is to say, if a holdable workpiece W does not exist despite the repeated stirring operations, the hand 27 is moved to another region and is allowed to perform the holding operation. Accordingly, the holding operation or the stirring operation can be efficiently performed within the container 30 without repeating the stirring operation for a long period of time.

In the foregoing description, the bottom surface 30a of the container 30 is divided into four regions A1 to A4, but the present disclosure is not limited thereto. The bottom surface 30a of the container 30 may be divided into three or less regions, or five or more regions.

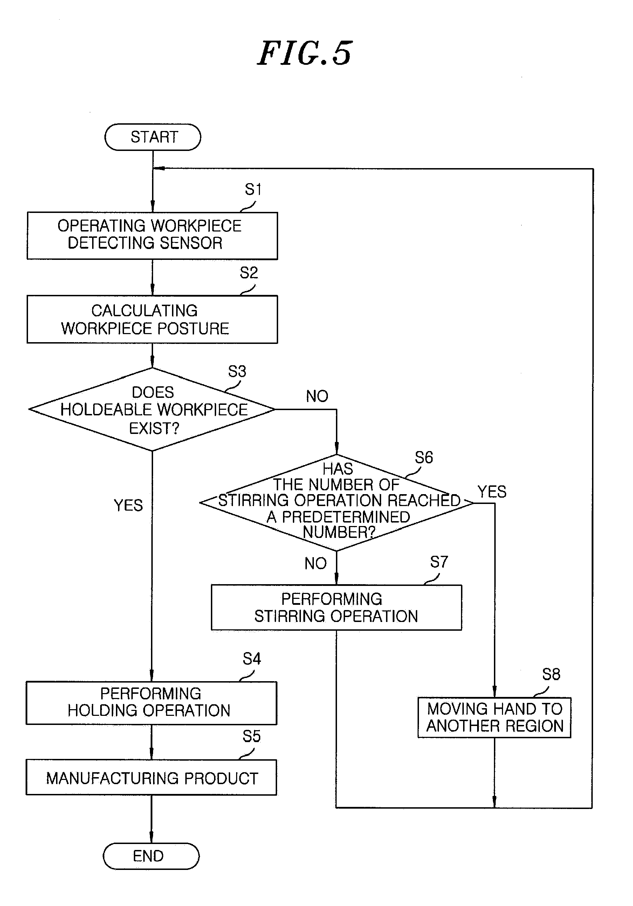

Next, a processing procedure performed by the robot system 1 in accordance with the embodiment will be described with reference to Fig. 5. Fig. 5 is a flowchart showing a processing procedure performed by the robot system 1 in accordance with the embodiment.

As shown in Fig. 5, the workpiece detecting sensor controller 61 outputs a detection start instruction to the workpiece detecting sensor 40 to operate the workpiece detecting sensor 40 (step S1). Then, the workpiece posture/position calculator 63 calculates a workpiece posture based on the sensor information 71 and the workpiece information 72 stored in the memory 70 (step S2).

Next, based on the workpiece posture thus calculated, the determinator 64 determines whether a workpiece W capable of being held by the hand 27 exists among the workpieces W within the container 30 (step S3). If a holdable workpiece W exists (if Yes in step S3), the holding operation controller 65 allows the robot 10 to perform a holding operation (step S4).

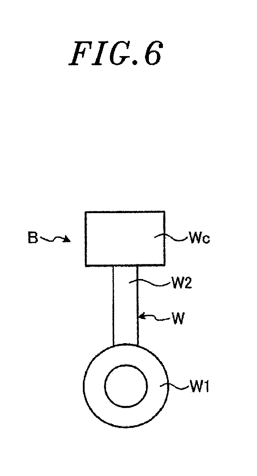

Subsequently, the workpiece W and another workpiece Wc are assembled together by the robot 10 or another robot (not shown), thereby manufacturing a product B as shown in Fig. 6 (step S5). Fig. 6 is a schematic side view showing the product B. While an assembled member has been illustrated as the product B, this is nothing more than one example and is not limitative.

On the other hand, if there is no holdable workpiece W (if No in step S3), the holding operation controller 65 determines whether the number of the stirring operation performed has reached a predetermined number, i.e., whether the number of the stirring operation performed is equal to or greater than the predetermined number (step S6).

If the number of the stirring operation performed has not reached the predetermined number (if No in step S6), the stirring operation controller 67 allows the robot 10 to perform the stirring operation (step S7). On the other hand, if the number of the stirring operation performed has reached the predetermined number (if Yes in step S6), the holding operation controller 65 allows the hand 27 to move to another region different from the specified region where the holding operation and the stirring operation has been performed (step S8). Then, step S1 is performed again.

As described above, the robot system in accordance with the present embodiment includes the robot 10, the container 30, the determinator 64, the motion controller 66, the torque limitter 68 and the stirring operation controller 67.

The robot 10 includes the first to sixth motors M1 to M6 for driving the first to sixth joint parts 11 to 16, respectively, and the hand 27 for holding the workpiece W. The workpieces W are accommodated within the container 30. The determinator 64 determines whether a workpiece W capable of being held by the hand 27 exists among the workpieces W of the container 30. The motion controller 66 controls the motions of the first to sixth motors M1 to M6. When the determinator 64 determines that there is no workpiece W capable of being held by the hand 27, the torque limitter 68 limits the motion torques to be commanded from the motion controller 66 to the first to sixth motors M1 to M6. The stirring operation controller 67 allows the motion controller 66 to perform a stirring operation by which the workpieces W accommodated within the container 30 are stirred by the hand 27 with the motion torques limited by the torque limitter 68. This makes it possible to perform the stirring operation for the workpieces W without applying an excessive load to the hand 27 and the like and without causing damage to the hand 27.

In the aforementioned embodiment, the six-axis robot has been described as one example of the robot 10. However, the present disclosure is not limited to the six-axis robot. It may be possible to use, in addition to the six-axis robot, e.g., a seven-axis robot or an eight-axis robot. It may also be possible to use other kinds of robots such as a dual-arm robot and the like.

It should be understood by those skilled in the art that various modifications, combinations, sub-combinations and alterations may occur depending on design requirements and other factors insofar as they are within the scope of the appended claims or the equivalents thereof.

## Claims

1. A robot system comprising:
a robot including at least one joint part, at least one drive source for driving the at least one joint part and an end effector;
a container configured to accommodate workpieces;
a determinator configured to determine whether a workpiece capable of being held by the end effector exists among the workpieces accommodated within the container;
a motion controller configured to control a motion of each drive source of the robot;
a torque limitter configured to, when the determinator determines that there is no workpiece capable of being held by the end effector, limit a motion torque of at least one of the each drive source to be commanded from the motion controller to the each drive source; and
a stirring operation controller configured to, when the determinator determines that there is no workpiece capable of being held by the end effector, allow the motion controller to perform a stirring operation, by which the workpieces accommodated within the container are stirred by the end effector, in a state where the motion torque is limited by the torque limitter.

2. The system of claim 1, wherein the at least one joint part includes a joint part which is arranged in a position nearest to the end effector and configured to change relative positions of links connected to the joint part, the at least one drive source includes a drive source for driving the joint part arranged in a position nearest to the end effector, and the torque limitter limits a motion torque of the drive source.

3. The system of claim 1, wherein the at least one joint part includes a plurality of joint parts, the at least one drive source includes a plurality of drive sources for driving the respective joint parts, and the torque limitter limits motion torques of at least two of the plurality of drive sources.

4. The system of any one of claims 1 to 3, wherein the stirring operation controller determines a start position of the stirring operation of the end effector within the container, based on postures of the workpieces, and allows the motion controller to place the end effector at the start position and to move the end effector for a predetermined distance within the container such that the stirring operation is performed.

5. The system of any one of claims 1 to 4, further comprising:
a holding operation controller configured to allow the motion controller to perform a holding operation, by which one of the workpieces is taken and held by the end effector, within one of a plurality of regions into which a bottom surface of the container is divided, and
wherein the holding operation controller allows, when the determinator determines that there is no workpiece capable of being held by the end effector in the one region and when the number of the stirring operation performed reaches a predetermined number, the motion controller to move the end effector to another region different from the one region to perform the holding operation.

6. A product manufacturing method using a robot including a joint part, a drive source for driving the joint part, and an end effector, and a container configured to accommodate workpieces, the product manufacturing method comprising:
determining whether a workpiece capable of being held by the end effector exists among the workpieces accommodated within the container; and
when it is determined that there is no workpiece capable of being held by the end effector, stirring the workpieces accommodated within the container by the end effector with a motion torque of the drive source being limited.
